# EUROPÄISCHE PATENTSCHRIFT

(11) **EP 2 956 562 B1**
(45) Veröffentlichungstag und Bekanntmachung des Hinweises auf die Patenterteilung: **30.12.2020**
(21) Anmeldenummer: 14712566.0
(22) Anmeldetag: 13.02.2014
(51) Int. Cl.: C22C 21/00

(54) **NICKEL-KOBALT-LEGIERUNG**
NICKEL-COBALT ALLOY
ALLIAGE NICKEL-COBALT

(30) Priorität: 14.02.2013 DE 102013002483
(43) Veröffentlichungstag der Anmeldung: 23.12.2015
(73) Patentinhaber: VDM Metals International GmbH, 58791 Werdohl (DE)
(72) Erfinder: GEHRMANN, Bodo, 58440 Plettenberg (DE); KLÖWER, Jutta, 40547 Düsseldorf (DE); FEDOROVA, Tatiana, 38179 Schwülper (DE); RÖSLER, Joachim, 38116 Braunscheid (DE)
(86) Internationale Anmeldenummer: PCT/DE2014/000053
(87) Internationale Veröffentlichungsnummer: WO 2014/124626

(56) Entgegenhaltungen:
- US-A1- 2008 166 258
- US-A1- 2008 166 258
- US-A1- 2009 257 908
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -", MITTEILUNGEN DER DEUTSCHEN PATENTANWAELTE, HEYMANN, KOLN, DE, 1 January 1993 (1993-01-01), pages 178-190, XP000961882, ISSN: 0026-6884

## Beschreibung

Der Erfindungsgegenstand betrifft eine Nickel-Kobalt-Legierung.

Ein bedeutender metallischer Werkstoff für rotierende Scheiben in Gasturbinen ist die Nickellegierung Alloy 718. Die chemische Zusammensetzung der Legierung Alloy 718 ist in Tabelle 1 gemäß der Norm AMS 5662 aufgeführt.

Die Anforderungen an die mechanischen Eigenschaften, die die Legierung Alloy 718 gemäß der Norm AMS 5662 erfüllen muss, sind in der Tabelle 2 aufgeführt. Darüber hinaus wird für die Verwendung als rotierende Scheibe in einer Flugzeugturbine eine Dehnung < 0,2 % nach einem Kriechtest bei einer Temperatur von 650°C und einer Last von 550 MPa nach einer Belastungszeit von 35 h (bei noch höheren Anforderungen nach 100 h) gefordert sowie im Dauerschwingversuch (Low Cycle Fatigue / LCF-Test) hohe Zyklenzahlen bis zum Bruch erwartet. Hierbei werden Zyklenzahlen von einigen 10.000 Zyklen bis Zyklen von mehr als 100.000 gefordert, je nach Testbedingung, die aufgrund von unterschiedlichen Scheibenauslegungen spezifiziert sind. Gemäß der Norm AMS 5662 müssen die mechanischen Anforderungen nach einer Dreistufenglühung - einstündige Lösungsglühung bei einer Glühtemperatur zwischen 940 und 1000°C + Aushärtung bei 720°C für 8 h + 620°C für 8 h - erfüllt werden.

Für die hohen Festigkeitseigenschaften der Nickellegierung Alloy 718 sind im Wesentlichen zwei Ausscheidungsphasen verantwortlich. Dies ist einerseits die γ"-Phase Ni₃Nb und andererseits die y'-Phase Ni₃(Al,Ti). Eine dritte wesentliche Ausscheidungsphase ist die δ-Phase, die die Anwendungstemperatur der Legierung Alloy 718 auf eine maximale Temperatur von 650°C beschränkt, da oberhalb dieser Temperatur sich die metastabile γ"-Phase in die stabile δ-Phase umwandelt. Durch diese Umwandlung verliert der Werkstoff seine Kriechfestigkeitseigenschaften. Im Verlauf des Herstellungsprozesses des Werkstoffs Alloy 718 vom Umschmelzblock zum Halbzeug eines geschmiedeten Knüppels spielt die δ-Phase aber während des Schmiedeprozesses eine wichtige Rolle, um ein sehr feinkörniges, homogenes Korngefüge zu erreichen. Bei Schmiedehitzen im Bereich der Ausscheidungstemperatur der δ-Phase resultieren geringe Anteile an Ausscheidungen an δ-Phase in eine Kornverfeinerung. Dieses kleine Korn des Knüppelgefüges bleibt bestehen bzw. wird durch die Warmumformung bei der Herstellung insbesondere von Turbinenscheiben noch feinkörniger, wenn auch in diesem Fall aus einer Temperatur unterhalb der δ-Phasen-Lösungstemperatur geschmiedet wird. Das sehr feinkörnige Gefüge ist eine Voraussetzung für sehr hohe Zyklenzahlen bis zum Bruch beim LCF-Test. Da die Ausscheidungstemperatur der γ'-Phase der Legierung Alloy 718 sehr viel niedriger liegt als die δ-Phasen-Lösungstemperatur von etwa 1020°C, weist die Legierung Alloy 718 ein weites Umformtemperaturfenster auf, so dass ein Schmieden von Block an Knüppel oder von Knüppel an Turbinenscheibe unproblematisch ist hinsichtlich möglicher Oberflächenaufbrüche durch y'-Phasenausscheidungen, die beim Schmieden bei sehr niedrigen Temperaturen auftreten können. Daher ist die Legierung Alloy 718 sehr gutmütig hinsichtlich des Warmumformprozesses. Nachteilig ist jedoch die relativ niedrige Anwendungstemperatur der Legierung Alloy 718 bis 650°C.

Eine weitere Nickellegierung "Waspaloy" zeichnet sich durch eine gute Gefügestabilität bei höheren Temperaturen bis etwa 750°C aus und bietet daher eine um etwa 100 K höhere Anwendungstemperatur als die Legierung Alloy 718. Die Gefügestabilität bis zu höheren Temperaturen erzielt die Legierung Waspaloy durch höhere Legierungsanteile der Elemente Al und Ti. Hiermit weist die Legierung Waspaloy eine hohe Lösungstemperatur der y'-Phase auf, was eine höhere Anwendungstemperatur ermöglicht. Die chemische Zusammensetzung der Legierung Waspaloy ist in Tabelle 3 gemäß der Norm AMS 5704 aufgeführt.

Die Anforderungen an die mechanischen Eigenschaften, die die Legierung Waspaloy gemäß der Norm AMS 5704 erfüllen muss, sind in Tabelle 4 aufgeführt. Darüber hinaus wird für die Verwendung als rotierende Scheibe in einer Flugzeugturbine eine Dehnung < 0,2 % nach einem Kriechtest bei einer Testtemperatur und einer Testlast nach einer Belastungszeit von 35 h (bei noch höheren Anforderungen nach 100 h) gefordert sowie im Dauerschwingversuch (Low Cycle Fatigue / LCF-Test) hohe Zyklenzahlen bis zum Bruch erwartet. Hierbei werden, je nach Testbedingung, Zyklenzahlen von einigen 10.000 Zyklen bis Zyklen von mehr als 100.000 gefordert, die aufgrund von unterschiedlichen Scheibenauslegungen spezifiziert sind. Gemäß der Norm AMS 5704 müssen die mechanischen Anforderungen nach einer Dreistufenglühung - vierstündige Lösungsglühung bei einer Glühtemperatur zwischen 996 und 1038°C + Stabilisierungsglühung bei 845°C für 4 h + Aushärtung bei 760°C für 16 h - erfüllt werden.

Die hohe y'-Lösungstemperatur von etwa 1035°C ist allerdings auch die Ursache für die schlechte Warmumformbarkeit der Legierung Waspaloy. Schon bei einer Oberflächentemperatur von etwa ≤ 980°C können bei Schmiedeprozessen vom Umschmelzblock an Knüppel oder vom Knüppel an Turbinenscheibe tiefe Brüche an der Oberfläche der Schmiedestücke durch y'-Phasenausscheidungen auftreten. Somit ist das Umformtemperaturfenster für Waspaloy recht klein, was mehrere Umformhitzen durch mehrfache Rücklagen in Wärmeöfen bedingt, wodurch eine längere Prozessdauer und damit höhere Herstellungskosten resultieren. Aufgrund der notwendigerweise höheren Schmiedetemperaturen und das Nichtvorhandensein einer kornverfeinernden δ-Phase ist ein sehr feines Korngefüge am geschmiedeten Knüppel aus der Legierung Waspaloy nicht erreichbar, so wie dies im Fall der Legierung Alloy 718 darstellbar ist.

Die Legierungen Alloy 718 und Waspaloy werden für Luftfahrtanwendungen in einem VIM-Ofen als Primärschmelze erschmolzen und zu Rundelektroden in Kokillen gegossen. Nach weiteren Bearbeitungsschritten werden die Elektroden entweder im Double-Melt-Schmelzverfahren ESU- oder im VAR-Prozess umgeschmolzen oder VAR-Umschmelzblöcke im Triple-Melt-Verfahren VIM / ESU / VAR erzeugt. Bevor die Umschmelzblöcke warmumgeformt werden können, werden diese einer Homogenisierungsglühung unterzogen. In mehreren Schmiedehitzen werden daraufhin die Umschmelzblöcke an Knüppel geschmiedet, die wiederum als Schmiedevormaterial für die Herstellung von z.B. Turbinenscheiben dienen.

Die US 6,730,264 offenbart eine Nickel-Chrom-Kobalt-Legierung folgender Zusammensetzung: 12 bis 20 % Cr, bis 4 % Mo, bis 6 % W, 0,4 bis 1,4 % Ti, 0,6 bis 2,6 % Al, 4 bis 8 % Nb (Ta), 5 bis 12 % Co, bis 14 % Fe, bis 0,1 % C, 0,003 bis 0,03 % P, 0,003 bis 0,015 % B, Rest Nickel.

Die DE 699 34 258 T2 offenbart ein Verfahren zur Herstellung eines aus Waspaloy gebildeten Gegenstands, aufweisend die folgenden Schritte:
a) Bereitstellen einer Charge eines Materials, welches in Gew.-% aus 18 bis 21 Cr, 3,5 bis 5 Mo, 12 bis 15 Co, 2,75 bis 3,25 Ti, 1,2 bis 1,6 Al, bis 0,08 Zr, 0,003 bis 0,010 B, Rest Ni und zufälligen Verunreinigungen besteht;
b) Schmelzen der Charge des Materials in einer Vakuumumgebung bei einem Druck von weniger als 100 µ (13,33 Pa) in einem Keramik-freien Schmelzsystem und Erwärmen der Charge des Materials auf eine begrenzte Überhitze innerhalb von 200°F (93°C) oberhalb des Schmelzpunktes der Legierung;
c) Gießen der geschmolzenen Charge des Materials in eine Schussbüchse eines Druckgussapparats in der Vakuumumgebung, so dass das geschmolzene Material weniger als die Hälfte der Schussbüchse füllt; und
d) Einspritzen des geschmolzenen Materials unter Druck in eine wiederverwendbare Form.

Durch die US 2008/0166258 A1 ist eine wärmebeständige Nickelbasislegierung bekannt geworden, beinhaltend (in Gew.-%):
≤ 0,1 C, ≤ 1,0 % Si, ≤ 1,5 % Mn, 13,0 - 25,0 % Cr, 1,5 - 7,0 % Mo, 0,5 - 4,0 % Ti, 0,1 - 3,0 % Al, optional mindestens ein Element aus der Gruppe, beinhaltend 0,15 - 2,5 % W, 0,001 - 0,02 % B, 0,01 - 0,3 Zr, 0,3 - 6,0 % Nb, 5,0 - 18,0 % Co und 0,03 - 2,0 % Cu, Rest Nickel und unvermeidliche Verunreinigungen.

Der Erfindung liegt die Aufgabe zugrunde, eine Legierung bereitzustellen, bei welcher sich die zuvor beschriebenen Vorteile der beiden bekannten Legierungen Alloy 718 und Waspaloy, d.h. die gute Warmumformbarkeit der Legierung Alloy 718 und die Gefügestabilität bis zu höheren Temperaturen von etwa 750°C der Legierung Waspaloy vereinen lassen.

Diese Aufgabe wird gelöst durch eine Ni-Co-Legierung mit (in Gew.-%) > 0 - max. 10 % Fe, > 12 bis < 35 % Co, 13 bis 23 % Cr, 1 bis 6 % Mo, 4 bis 6 % Nb + Ta, > 0 - < 3 % Al, > 0 bis <
2 % Ti, > 0 - max. 0,1 % C, > 0 - max. 0,03 % P, > 0 - max. 0,01 % Mg, > 0 - max. 0,02 % B, > 0 - max. 0,1 % Zr, Rest Ni, bedarfsweise an Begleitelementen (in Gew.-%) enthaltend:
max. 0,5 % Cu
max. 0,015 % S
max. 1,0 % Mn
max. 1,0 % Si
max. 0,01 % Ca
max. 0,03 % N
max. 0,02 % O,
bedarfsweise des Weiteren (in Gew.-%) enthaltend:
   bis 4 % V
   bis 4 % W, wobei
   die Legierung nachfolgend aufgeführte Forderungen und Kriterien erfüllt:
      a) 3 at% < Al+Ti (at%) ≤ 5,6 at% sowie 11,5 at%≤ Co ≤ 35 at%;
      b) Verhältnis Al/Ti ≥ 5 (auf Basis der Gehalte in at%)..

Vorteilhafte Weiterbildungen der erfindungsgemäßen Legierung sind den zugehörigen Unteransprüchen zu entnehmen.

Unter Zugrundelegung der in Anspruch 1 genannten Parameter weist die erfindungsgemäße Legierung die Nachteile der Legierung Alloy 718, nämlich der relativ niedrigen Anwendungstemperatur und der Legierung Waspaloy, nämlich der schlechten Warmumformbarkeit, nicht mehr auf.

Die erfindungsgemäße Legierung erfüllt vorzugsweise die Forderung "945°C ≤ γ'-Solvustemperatur ≤ 1000°C".

Von besonderem Vorteil ist, wenn bei einem ΔT (δ-γ') ≥ 80 K und Al + Ti ≤ 4,7 Atom-% Co-Gehalte zwischen 11,5 und 35 at% eingestellt werden können.

Die erfindungsgemäße Legierung hat vorteilhafterweise gleich große oder größere Temperaturintervalle zwischen δ-Solvus- und y '-Solvus-Temperatur als 140 K und hat hierbei einen Co-Gehalt zwischen 15 und 35 at%.

Einem weiteren Gedanken der Erfindung gemäß wird der Ti-Gehalt ≤ 0,8 Atom-% in der Legierung eingestellt, wobei bevorzugt auf einen Gehalt ≤ 0,65 Atom-% zurückgegriffen wird.

Auch eine Einschränkung der (Nb+Ta)-Gehalte auf Werte zwischen 4,7 und 5,7 Gew.-% kann dazu beitragen, die gute Warmumformbarkeit der Legierung Alloy 718 und die Gefügestabilität bis zu höheren Temperaturen von etwa 750°C der Legierung Waspaloy zu verbessern.

Die Wertebereiche für ein Verhältnis zweier Elementgehalte sind unterschiedlich für Angaben in Atom- und Gewichtsprozent. Auf der Ebene der Strukturen sind Atomteile wesentlich. Insbesondere in Tabelle 6a sind die für die erfindungsgemäße Legierung wesentlichen Elemente, nämlich Al, Ti und Co, in Atom-% angegeben.

An Begleitelementen kann die erfindungsgemäße Legierung noch folgende Elemente enthalten:

| | |
|---|---|
| Cu | max. 0,5 Gew.-% |
| S | max. 0,015 Gew.-% |
| Mn | max. 1,0 Gew.-% |
| Si | max. 1,0 Gew.-% |
| Ca | max. 0,01 Gew.-% |
| N | max. 0,03 Gew.-% |
| O | max. 0,02 Gew.-% |

Sofern es für den jeweiligen Anwendungsfall sinnvoll ist, kann die erfindungsgemäße Legierung bedarfsweise noch folgende Elemente enthalten:

| | |
|---|---|
| V | bis 4 Gew.-% |
| W | bis 4 Gew.-% |

In der erfindungsgemäßen Legierung können folgende Elemente wie folgt eingestellt werden:
0,05 at% ≤ Ti ≤ 0,5 at%,
3,6 at% ≤ Al ≤ 4,6 at%,
15 at% ≤ Co ≤ 32 at%.

Je nach Anwendungsgebiet der erfindungsgemäßen Legierung kann es unter Kostengesichtspunkten sinnvoll sein, die Elemente Ni und/oder Co durch das preiswertere Elemente Fe innerhalb der im Anspruch 1 angegebenen Bereichsgrenzen teilweise zu substituieren.

Die erfindungsgemäße Legierung ist bevorzugt einsetzbar als Komponente in einer Flugzeugturbine, insbesondere einer rotierenden Turbinenscheibe sowie als Komponente einer stationären Turbine.

Die Legierung kann in folgenden Halbzeugformen gefertigt werden: Band, Blech, Draht, Stange.

Der Werkstoff ist hochwarmfest und außer den bereits genannten Anwendungen auch für nachstehende Einsatzbereiche einsetzbar: im Motorenbau, in Abgassystemen, als Hitzeschild, im Ofenbau, im Kesselbau, im Kraftwerksbau, insbesondere als Überhitzerrohre, als Bauteile in der Gas- und Ölfördertechnik, in stationären Gas- und Dampfturbinen sowie als Schweißzusatz für sämtliche der genannten Anwendungen.

Die vorliegende Erfindung beschreibt eine Nickellegierung insbesondere für kritische rotierende Komponenten einer Flugzeugturbine. Die erfindungsgemäße Legierung weist eine hohe Gefügestabilität bei hohen Temperaturen auf und bietet daher die Anwendbarkeit bis zu 100 K höheren Temperaturbelastungen als die bekannte Nickellegierung Alloy 718. Darüber hinaus zeichnet sich die erfindungsgemäße Legierung durch eine bessere Umformbarkeit aus als die der bekannten Nickellegierung Waspaloy. Die Legierung der vorliegenden Erfindung bietet technologische Eigenschaften, die die Anwendbarkeit in Gasturbinen in Form von Scheiben, Schaufeln, Halterungen, Gehäusen oder Wellen ermöglichen. Die vorliegende Legierung beschreibt die chemische Zusammensetzung, die technologischen Eigenschaften und die Prozesse für die Herstellung von Werkstoffhalbzeugen aus der erfindungsgemäßen Nickel-Kobalt-Legierung.

Die Eigenschaften der erfindungsgemäßen Legierung werden nachstehend abgehandelt:
Es wurde eine Vielzahl von Laborschmelzen mit unterschiedlichen chemischen Zusammensetzungen mittels eines Laborvakuumlichtbogenofens erzeugt.

Der Abguss erfolgte in eine massive zylindrische Kupferkokille mit einem Durchmesser von 13 mm. Beim Erschmelzen wurden drei Stangen mit der Länge etwa 80 mm erzeugt. Alle Legierungen wurden nach dem Erschmelzen homogenisiert. Der ganze Prozess fand im Vakuumofen statt und bestand aus 2 Stufen: 1140°C/6 h + 1175°C/20 h. Danach folgte das Abschrecken in einer ArgonAtmosphäre. Die Warmumformung für die erschmolzenen Legierungen wurde über einer Rundknetmaschine realisiert. Die Stangen wiesen zu Beginn einen Durchmesser von 13 mm auf und wurden in vier Rundknetvorgängen jeweils um einen Millimeter im Durchmesser auf den Enddurchmesser 9 mm verjüngt.

Tabelle 1 offenbart die chemische Zusammensetzung der dem Stand der Technik entsprechenden Legierung Alloy 718 gemäß geltender Norm AMS 5662, während sich Tabelle 2 mit den mechanischen Eigenschaften dieser Legierung auseinandersetzt.

Tabelle 3 offenbart die chemische Zusammensetzung der dem Stand der Technik entsprechenden Legierung Waspaloy gemäß geltender Norm AMS 5662, während sich Tabelle 4 mit den mechanischen Eigenschaften dieser Legierung auseinandersetzt.

Die erfindungsgemäßen chemischen Zusammensetzungen der Laborschmelzen sind in der Tabelle 5 aufgeführt. Darunter werden als Referenzwerkstoffe auch die bekannten Legierungen A718, A718 Plus und Waspaloy betrachtet. Neben den Referenzwerkstoffen sind die Versuchslegierungen mit den Buchstaben V und L und mit jeweils 2 Ziffern bezeichnet. Die chemischen Zusammensetzungen dieser Versuchslegierungen beinhalten Variationen in den Gehalten der Elemente Ti, Al, Co und Nb. Die Versuchslegierung V07 sowie die Laborschmelzen L12 und L13 weisen keine erfindungsgemäße Zusammensetzung auf.

Betrachtet man die Gehalte in Atomprozent der Elemente Ti, Al und Co sowie der Summe aus Al + Ti und des Verhältnisses der Elementgehalte Al/Ti, so ergeben sich in ausgewählten Bereichen sehr gute technologische Eigenschaften hinsichtlich der γ'-Solvus-Temperatur, der Differenz zwischen δ-Solvus- und γ'-Solvus-Temperaturen, der Vermeidung von primärer delta-Phase und Vermeidung der η-Phase, der Gefügestabilität bei 800°C nach Auslagerungsglühversuchen von 500 h und der mechanischen Härte HV nach einer Standardwärmebehandlung der Lösungsglühung und zweistufiger Aushärtungsglühung für A718 (980°C/1 h + 720°C/8 h + 620°C/8 h, vgl. Norm AMS 5662).

In Tabelle 6a sind die Gehalte in Atomprozent der Elemente Al, Ti und Co sowie der Summengehalt Al + Ti (in Atomprozent) und die Verhältnisse Al/Ti für die Versuchslegierungen und die 3 Referenzwerkstoffe der Tabelle 5 aufgeführt. Die Versuchslegierungen V05, V07, V10, V11, V12 sowie die Laborschmelzen L03 bis L07 sowie L09, L12, L13, L15 bis L18 weisen keine erfindungsgemäßen Summengehalte Al + Ti (in Atom-%) auf.

Die Tabelle 6b beinhaltet des Weiteren die berechneten Solvus-Temperaturen der δ-Phase und der γ'-Phase sowie die hieraus berechnete Temperaturdifferenz zwischen der δ-Solvus- und der γ'-Solvus-Temperatur ΔT (δ-γ'). In Tabelle 6b sind weiterhin die für die Versuchslegierungen ermittelten mechanischen Härtewerte 10 HV angegeben (nach dreistufiger Aushärtewärmebehandlung 980°C/1 h + 720°C/8 h + 620°C/8 h gemäß Norm AMS 5662 für A718). Außerdem gibt Tabelle 6b Anmerkungen zum Auftreten der η-Phase (berechnet oder beobachtet) an. Bezüglich der nicht erfindungsgemäßen Zusammensetzungen, respektive Summen- und Verhältnisangaben, wird auf die Tabellen 5 sowie 6a verwiesen.

In den folgenden Ausführungen werden die Kriterien für die Auswahl der erfindungsgemäßen Legierung erläutert und beispielhafte Versuchslegierungen angegeben.

Aus Festigkeits- und Gefügestabilitätsgründen soll die γ'-Solvus-Temperatur der erfindungsgemäßen Legierung um 50 K höher als diejenige der Legierung A718 sein, die eine γ'-Solvus-Temperatur von etwa 850°C aufweist. Auf der anderen Seite soll die γ'-Solvus-Temperatur der erfindungsgemäßen Legierung kleiner/gleich 1030°C sein. 1030°C entspricht etwa der γ'-Solvus-Temperatur der Legierung Waspaloy. Eine höhere γ'-Solvus-Temperatur würde die Warmumformbarkeit sehr negativ beeinflussen, da z.B. beim Schmiedeprozess im Fall von Oberflächentemperaturen des Schmiedestücks bereits geringfügig unterhalb der γ'-Solvus-Temperatur γ'-Ausscheidungen zu starken Aufhärtungen der Schmiedestückoberfläche führen, die wiederum bei weiteren Schmiedeumformungen zu erheblichen Aufbrüchen der Schmiedestückoberfläche führen können.

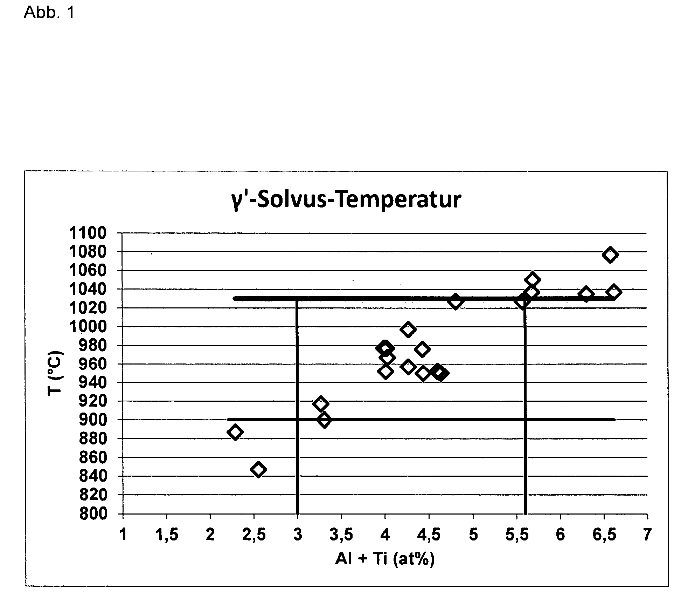

In Abb. 1 ist die γ'-Solvus-Temperatur der Versuchslegierungen in Abhängigkeit von den Summengehalten Al + Ti (at%) ihrer chemischen Zusammensetzungen aufgetragen.

Aus Abb. 1 ist zu erkennen, dass die Forderung "900°C ≤ γ'-Solvus-T ≤ 1030°C" durch die Eingrenzung 3 at% ≤ Al+Ti (at%) ≤ 5.6 at% erfüllt wird. Die Versuchslegierungen V13, V14, V15, V16, V17, V20, V21, V22 sind beispielhafte Legierungen für diesen Bereich.

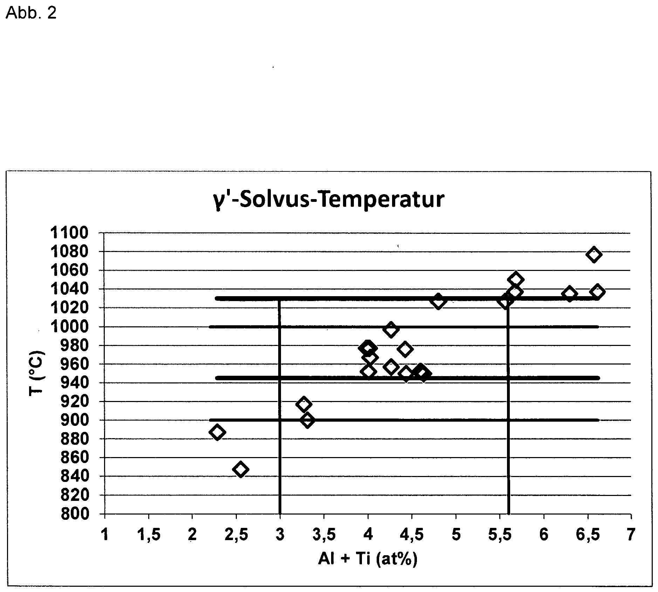

Für eine noch bessere Warmumformbarkeit soll die γ'-Solvus-Temperatur der erfindungsgemäßen Legierung < 1000°C sowie für eine Gefügestabilität bei noch höherer Temperatur > 945°C sein. Für diesen Bereich sind die Versuchslegierungen V14, V16, V17, V20, V21, V22 beispielhafte Legierungen. Der zwischen 945°C und 1000°C eingegrenzte Temperaturbereich ist aus Abb. 2 ersichtlich.

Der Co-Gehalt der Versuchslegierungen beeinflusst die δ-Solvus- und γ'-Solvus-Temperaturen und damit ΔT (δ-γ'). Der Co-Gehalt der erfindungsgemäßen Legierung darf nicht zu hoch sein, damit keine primäre δ-Phase auftritt. Dies beschränkt den Co-Gehalt auf < 35 at%. Beispielhafte Legierungen, bei denen primäre δ-Phase auftritt, sind die Versuchslegierungen L12 und L13, die beide einen Co-Gehalt von ca. 50 at% aufweisen.

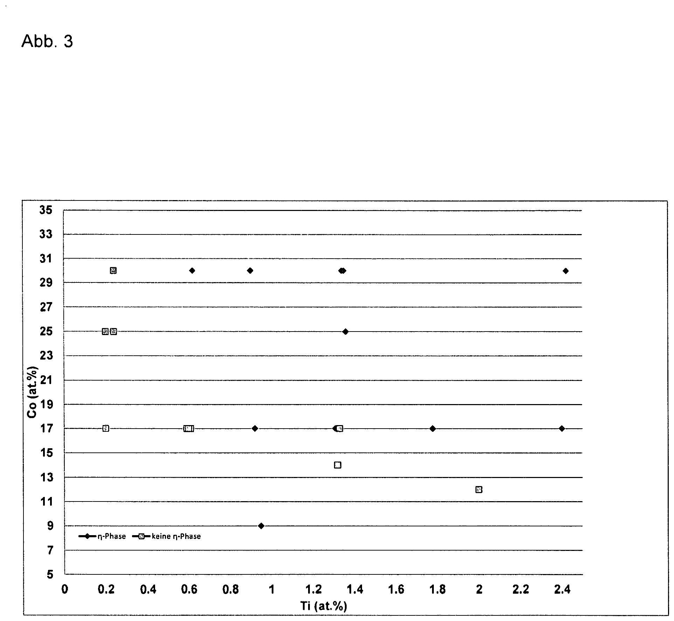

Abb. 3, in der das Auftreten der η-Phase gegen die Auftragungen der Gehalte an Co und Ti der Versuchslegierungen gekennzeichnet ist, zeigt, dass bei Legierungen mit Co-Gehalten größer 16 at% der Ti-Gehalt der erfindungsgemäßen Legierung auf ≤ 0,8 at% beschränkt sein muss, um das Auftreten einer stabilen η-Phase zu vermeiden. Beispielhafte Legierungen mit Ti ≤ 0,8 at% sind die Versuchslegierungen V13, V14, V15, V16, V17, V21 und V22. Bevorzugte Legierungen weisen einen Ti-Gehalt ≤ 0,65 at% auf. Dies sind die beispielhaften Versuchslegierungen V16, V17, V21 und V22.

Beim Schmiedeprozess werden geringfügige Anteile an δ-Phase für die Kornverfeinerung des Gefüges genutzt, d.h. es wird in den letzten Schmiedehitzen aus einer Temperatur geringfügig unterhalb der δ-Solvus-Temperatur geschmiedet, um ein sehr feinkörniges Gefüge des jeweiligen Schmiedestücks zu erzeugen. Um auf der anderen Seite mit einem ausreichend großen Schmiedetemperaturfenster arbeiten zu können, darf die γ'-Solvus-Temperatur nicht zu hoch sein und sie muss deutlich unterhalb der δ-Solvus-Temperatur der erfindungsgemäßen Legierungen liegen. Das ausreichend große Schmiedetemperaturfenster soll ≥ 80 K sein. Daher soll die Differenz zwischen δ-Solvus- und γ'-Solvus ΔT (δ-γ') ≥ 80 K betragen.

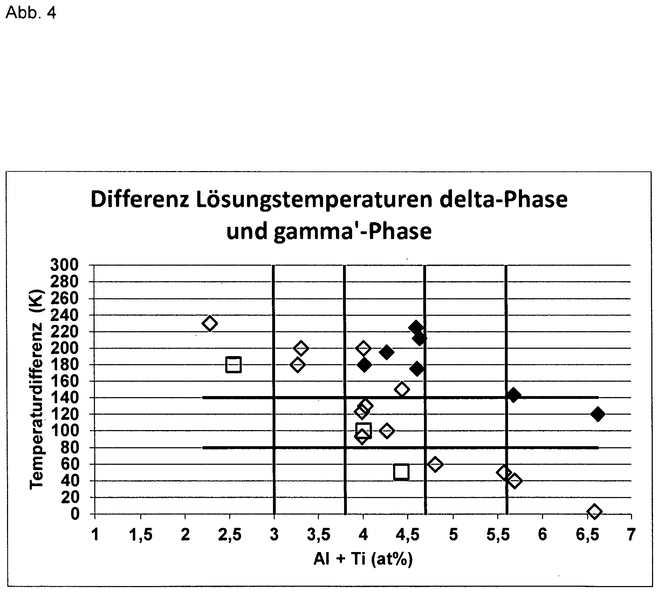

Aus Abb. 4 ist zu erkennen, das ΔT (δ-γ') ≥ 80 K ist, wenn der Summengehalt Al + Ti ≤ 4.7 at% und der Co-Gehalt ≥ 11,5 at% und ≤ 35 at% ist. Noch größere Temperaturintervalle ≥ 140 K zwischen δ-Solvus- und γ'-Solvus-Temperatur sind möglich, wenn gleichzeitig der Co-Gehalt der Legierung ≥ 15 at% und ≤ 35 at% ist.

Ein weiteres Kriterium resultiert aus der Forderung, die besagt, dass das Gefüge der erfindungsgemäßen Legierung stabil bei einer Auslagerungsglühtemperatur von 800°C (nach 500 h) sein soll. Dieses Kriterium wird von den erfindungsgemäßen Legierungen erfüllt, die ein Verhältnis Al/Ti ≥ 5,0 (auf Basis der Gehalte in at%) aufweisen. Beispielhafte Legierungen hierfür sind die Versuchslegierungen V13, V15, V16, V17, V21 und V22.

In Tabelle 7 sind beispielhafte Versuchslegierungen für die Forderung des Al/Ti-Verhältnisses für die erfindungsgemäße Legierung aufgeführt.

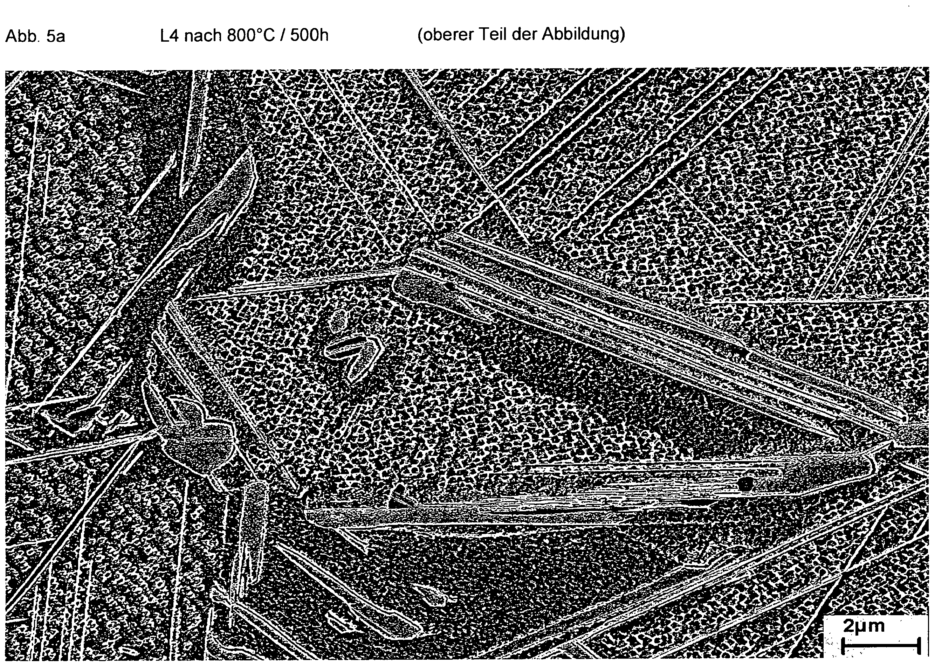

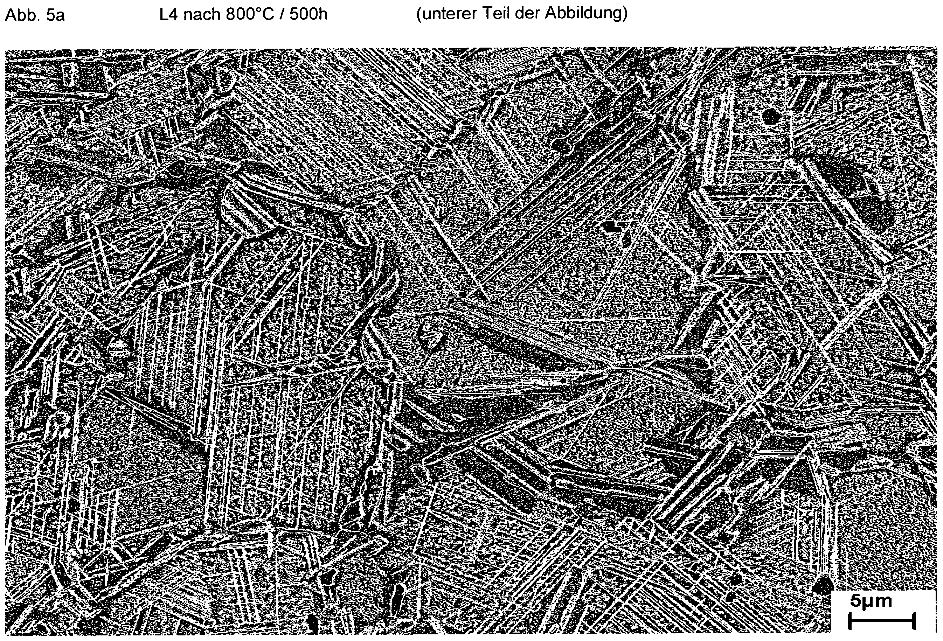

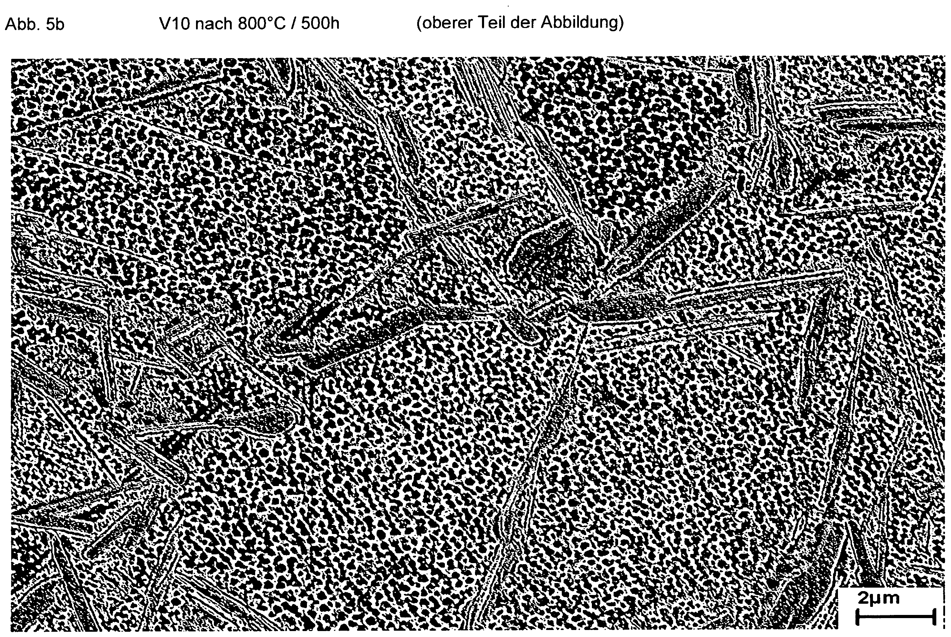

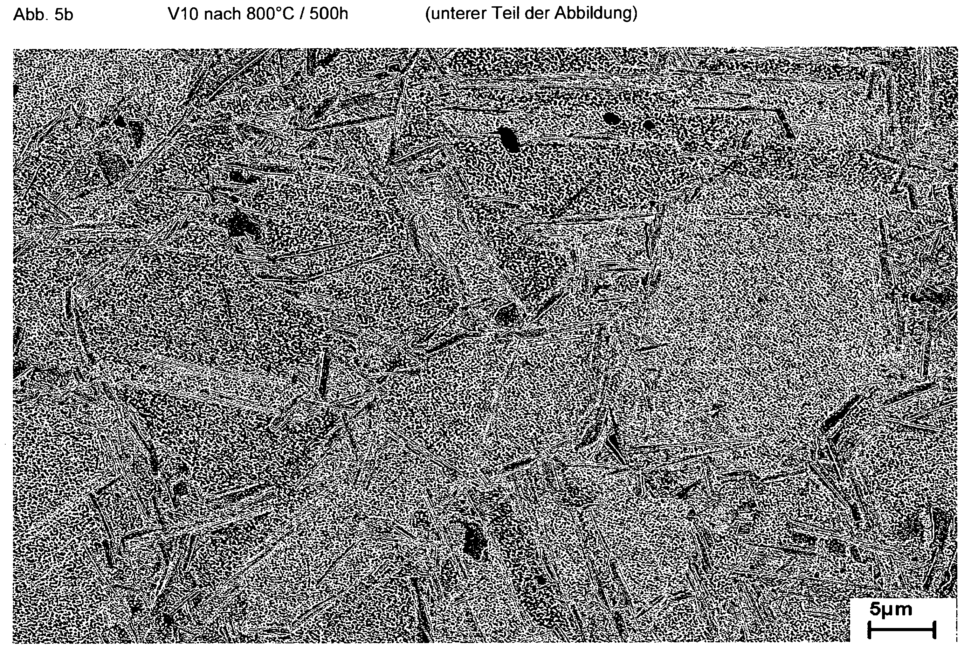

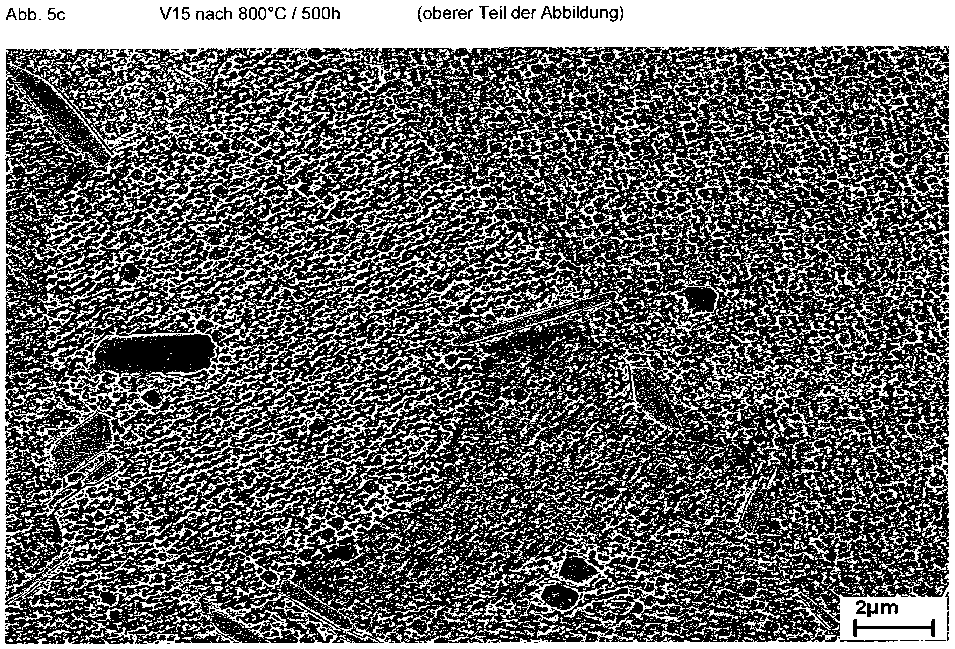

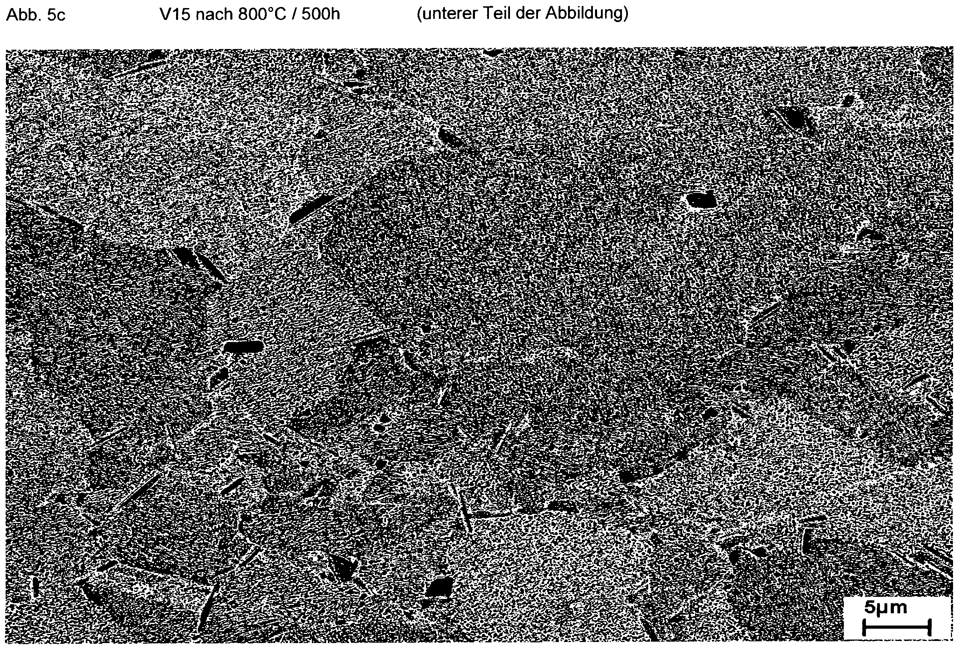

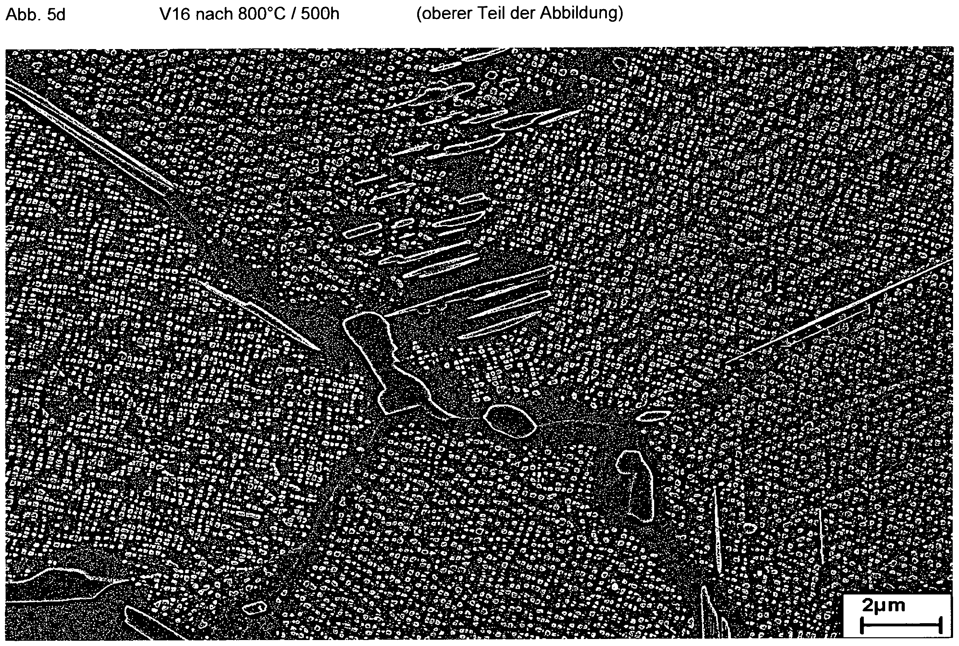

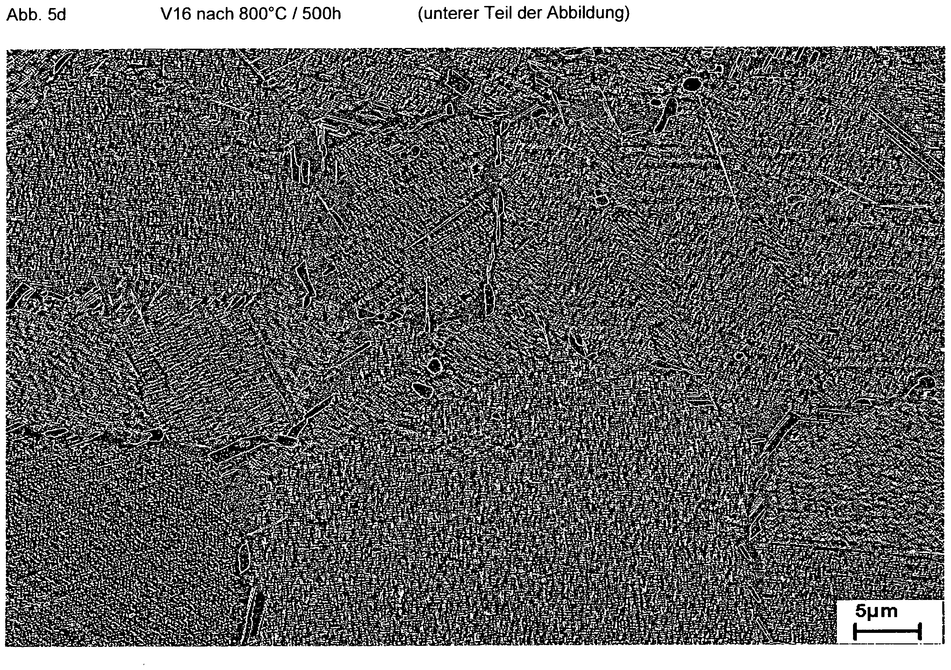

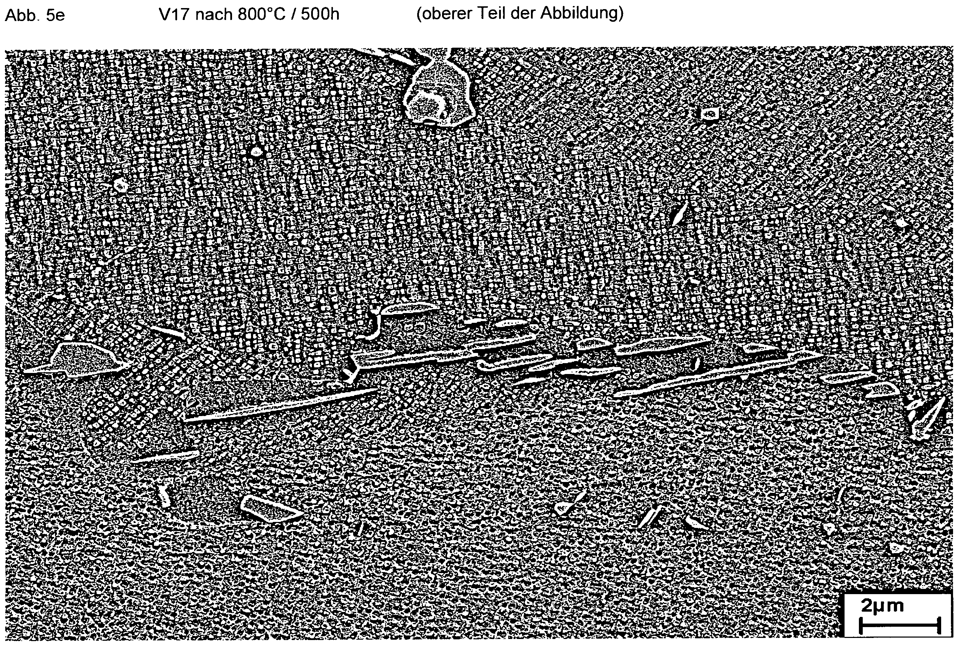

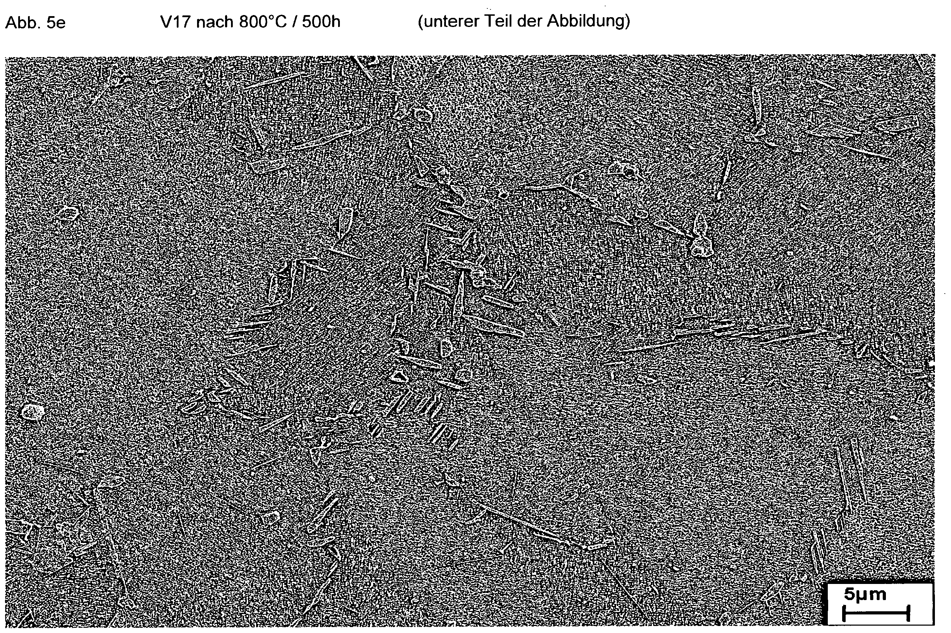

Beispielhafte REM-Aufnahmen sind für die Versuchslegierungen V15, V16 und V17 nach Auslagerungsglühungen von 500 h bei 800°C sind in Abb. 5a - 5e gezeigt.

**Tabelle 1: Chemische Zusammensetzung der Legierung Alloy 718 gemäß der Norm AMS 5662.**

| Element | Gewichtsprozent |
|---|---|
| C | max. 0,08 |
| Mn | max. 0,35 |
| P | max. 0,015 |
| S | max. 0,015 |
| Si | max. 0,35 |
| Cr | 17 - 21 % |
| Ni | 50 - 55 % |
| Fe | Rest |
| Mo | 2,8 - 3,3 % |
| Nb | 4,75 - 5,5 % |
| Ti | 0,65 - 1,15% |
| Al | 0,2 - 0,8 % |
| Al + Ti | 0,85 - 1,95 % |
| Co | max. 1 % |
| B | max. 0,006 % |
| Cu | max. 0,3 % |
| Pb | max. 0,0005 % |
| Se | max. 0,0003 % |
| Bi | max. 0,00003 % |

**Tabelle 2: Mechanische Eigenschaften der Legierung Alloy 718 gemäß der Norm AMS 5662.**

| Mechanische Eigenschaften | Testbedingungen | Anforderungen gemäß AMS 5662 |
|---|---|---|
| | | |
| Streckgrenze Rp0,2 | 20°C | ≥ 1034 MPa |
| Zugfestigkeit Rm | 20°C | ≥ 1276 MPa |
| Dehnung A5 | 20°C | ≥ 12% |
| Härte HB | 20°C | ≥ 331 HB |
| | | |
| Streckgrenze Rp0,2 | 650°C | ≥ 862 MPa |
| Zugfestigkeit Rm | 650°C | ≥ 1000 MPa |
| Dehnung A5 | 650°C | ≥ 12% |
| Brucheinschnürung Z | 650°C | ≥ 15% |
| | | |
| Stress Rupture Test | | |
| Zeit bis zum Bruch | 650°C | ≥ 23h |
| Dehnung A5 | Last 725MPa | ≥ 4 % |

**Tabelle 3: Chemische Zusammensetzung der Legierung Waspaloy gemäß der Norm AMS 5704.**

| Element | Gewichtsprozent |
|---|---|
| C | 0,02 - 0,10 % |
| Mn | max. 0,1 % |
| P | max. 0,015 % |
| S | max. 0,015 % |
| Si | max. 0,15 % |
| Cr | 18 - 21 % |
| Fe | max. 2 % |
| Mo | 3,5 - 5,0 % |
| Nb | |
| Ti | 2,75 - 3,25 % |
| Al | 1,2 - 1,6% |
| Co | 12 - 15% |
| Ni | Rest |
| B | 0,003 - 0,01 % |
| Cu | max. 0,1 % |
| Zr | 0,02 - 0,08 % |
| Pb | max. 0,0005 % |
| Bi | max. 0,00003 % |
| Se | max. 0,0003 % |
| Ag | max. 0,0005 % |

**Tabelle 4: Mechanische Eigenschaften der Legierung Waspaloy gemäß der Norm AMS 5704.**

| Mechanische Eigenschaften | Testbedingungen | Anforderungen gemäß AMS 5662 |
|---|---|---|
| | | |
| Streckgrenze Rp0,2 | 20°C | ≥ 827 MPa |
| Zugfestigkeit Rm | 20°C | ≥ 1207 MPa |
| Dehnung A5 | 20°C | ≥ 15 % |
| Härte HB | 20°C | ≥ 341 HB und ≤ 401 HB |
| | | |
| Streckgrenze Rp0,2 | 538°C | ≥ 724 MPa |
| Zugfestigkeit Rm | 538°C | ≥ 1069 MPa |
| Dehnung A5 | 538°C | ≥ 15 % |
| Brucheinschnürung Z | 538°C | ≥ 18 % |
| | | |
| Stress Rupture Test | | |
| Zeit bis zum Bruch | 732°C | ≥23h |
| Dehnung A5 | Last 552MPa | ≥5% |
| Stress Rupture Test | | |
| Zeit bis zum Bruch | 816°C | ≥23h |
| Dehnung A5 | Last 293MPa | ≥5% |

**Tab. 5: Chemische Zusammensetzungen (in Gewichtsprozent) der Versuchslegierungen (Ist-Analyse). Der C-Gehalt aller Legierungen beträgt ca. 0,025 Gew.-%. An Begleitelementen kann die jeweilige Legierung bedarfsweise nach folgende Elemente enthalten: Cu, S, Mn, Si, Ca, N, O. Je nach Anwendungsfall kann auch noch W bis 4 Gew.-% und/oder V bis 4 Gew.-% in der jeweiligen Legierung vorhanden sein. Die Legierungen A718 Plus und Waspaloy beinhalten jeweils 1 Gew.-% W.**

| Legierung | Ni | Fe | Cr | Mo | Ti | Al | Nb + Ta | Co |
|---|---|---|---|---|---|---|---|---|
| V05 | Rest | 0,05 | 18,17 | 2,96 | 2,00 | 1,96 | 5,50 | 17,03 |
| V07 | Rest | 0,06 | 18,40 | 2,96 | 2,01 | 1,97 | 5,45 | 29,95 |
| V10 | Rest | 0,05 | 18,48 | 3,03 | 1,11 | 2,04 | 5,38 | 17,03 |
| V11 | Rest | 0,06 | 18,50 | 3,05 | 1,11 | 2,03 | 5,39 | 30,04 |
| V12 | Rest | 0,05 | 18,40 | 2,97 | 0,50 | 1,23 | 5,53 | 17,04 |
| V13 | Rest | 0,04 | 18,41 | 2,99 | 0,49 | 1,97 | 5,50 | 16,98 |
| V14 | Rest | 0,04 | 18,43 | 2,99 | 0,49 | 1,60 | 5,52 | 17,01 |
| V15 | Rest | 0,04 | 18,50 | 2,96 | 0,50 | 2,33 | 5,45 | 17,05 |
| V16 | Rest | 0.05 | 18.25 | 2.98 | 0,17 | 1.90 | 5.51 | 17.25 |
| V17 | Rest | 0.05 | 18.48 | 2.96 | 0.17 | 1.90 | 5,40 | 24.98 |
| V20 | Rest | 0,05 | 18,70 | 2,99 | 0,52 | 2,04 | 5,60 | 30,10 |
| V21 | Rest | 0,04 | 18,70 | 2,96 | 0,20 | 2,04 | 5,58 | 25,06 |
| V22 | Rest | 0,04 | 18,70 | 2,96 | 0,20 | 2,04 | 5,40 | 30,10 |
| L03 | Rest | 0,18 | 18,20 | 2,90 | 0,75 | 0,63 | 5,49 | 16,98 |
| L04 | Rest | 0,04 | 18,45 | 3,06 | 1,09 | 1,24 | 5,46 | 17,05 |
| L06 | Rest | 0,21 | 18,40 | 2,91 | 0,73 | 0,64 | 5,49 | 30,00 |
| L07 | Rest | 0,38 | 18,32 | 2,93 | 1,07 | 0,92 | 5,49 | 17,04 |
| L09 | Rest | 0,46 | 18,40 | 2,94 | 1,46 | 1,23 | 5,60 | 16,90 |
| L12 | Rest | 0.34 | 18.50 | 2.90 | 0.72 | 0.61 | 5.36 | 49.76 |
| L13 | Rest | 0.45 | 18.32 | 2.90 | 1.48 | 0,69 | 5.59 | 49,88 |
| L15 | Rest | 0.03 | 18.47 | 3.03 | 1,09 | 1,25 | 5,38 | 13,99 |
| L16 | Rest | 0.03 | 18.46 | 3.02 | 1,64 | 0,92 | 5,40 | 12.00 |
| L17 | Rest | 0.04 | 18.42 | 3.04 | 1,12 | 1,23 | 5.41 | 25.14 |
| L18 | Rest | 0.05 | 18.49 | 3.04 | 1,11 | 1,24 | 5,38 | 30.01 |
| A718 | Rest | 17.06 | 18.71 | 2.93 | 0,99 | 0,48 | 5,32 | 0.02 |
| A718Plus | Rest | 10,00 | 18,00 | 2,75 | 0,70 | 1,45 | 5,45 | 9,00 |
| Waspaloy | Rest | 0,20 | 19,5 | 4,25 | 3,00 | 1,30 | 0 | 13,5 |

**Tabelle 6a: Elementgehalte in Atomprozent bzw. Verhältnisse von Elementgehalten der Versuchslegierungen.**

| Legierung at% | Al/Ti | Al+Ti | Ti | Al | Co |
|---|---|---|---|---|---|
| V05 | 1.74 | 6.58 | 2,40 | 4,18 | 16,65 |
| V07 | 1.73 | 6.62 | 2,42 | 4,20 | 29,27 |
| V10 | 3,28 | 5,69 | 1,33 | 4,36 | 16,65 |
| V11 | 3,24 | 5,68 | 1,34 | 4,34 | 29,40 |
| V12 | 4,36 | 3,27 | 0,61 | 2,66 | 16,85 |
| V13 | 7,15 | 4,81 | 0,59 | 4,22 | 16,65 |
| V14 | 5,83 | 4,03 | 0,59 | 3,44 | 16,75 |
| V15 | 8,28 | 5,57 | 0,60 | 4,97 | 16,64 |
| V16 | 20,35 | 4,27 | 0,20 | 4,07 | 16,94 |
| V17 | 20,35 | 4,27 | 0,20 | 4,07 | 24,52 |
| V20 | 20,00 | 4,64 | 0,62 | 4,02 | 29,58 |
| V21 | 18,10 | 4,61 | 0,24 | 4,37 | 24,49 |
| V22 | 18,17 | 4,60 | 0,24 | 4,36 | 29,48 |
| L03 | 1,49 | 2,29 | 0,92 | 1,37 | 16,94 |
| L04 | 2,02 | 3,99 | 1,32 | 2,67 | 16,83 |
| L06 | 1,55 | 2,30 | 0,90 | 1,40 | 29,93 |
| L07 | 1,53 | 3,31 | 1,31 | 2,00 | 16,96 |
| L09 | 1,49 | 4,44 | 1,78 | 2,66 | 16,75 |
| L12 | 1,51 | 2,21 | 0,88 | 1,33 | 49,73 |
| L13 | 0,83 | 3,33 | 1,82 | 1,51 | 49,83 |
| L15 | 2,04 | 4,01 | 1,32 | 2,69 | 13,80 |
| L16 | 0,99 | 3,99 | 2,00 | 1,99 | 11,87 |
| L17 | 1,95 | 4,01 | 1,36 | 2,65 | 24,83 |
| L18 | 1,98 | 4,02 | 1,35 | 2,67 | 29,63 |
| A718 | 0,86 | 2,55 | 1,37 | 1,18 | 0,02 |
| A718Plus | 3,66 | 4,43 | 0,95 | 3,48 | 9,00 |
| Waspaloy | 0,77 | 6,3 | 3,56 | 2,74 | 13,5, |

**Tabelle 6b: Solvus-Temperaturen der δ-Phase und der γ'-Phase, Differenz ΔT (δ-γ') der Solvus-Temperaturen der δ- und γ'-Phasen, Härte 10HV (nach Aushärtewärmebehandlung 980°C/1 h + 720°C/8 h + 620°C/8 h gemäß Norm AMS 5662 für A718) und Anmerkungen zur η-Phase für die Versuchslegierungen.**

| Legierung | δ-Solv. T. (°C) | γ'-Solvus T (°C) | ΔT (δ-γ') (K) | Härte 10HV | Anmerkungen zur η-Phase (berechnet oder beobachtet) |
|---|---|---|---|---|---|
| V05 | 1080 | 1077 | 3 | 506 | Große Mengen η-Phase |
| V07 | 1157 | 1037 | 120 | 539 | η-Phase |
| V10 | 1090 | 1050 | 40 | 491 | Keine η-Phase |
| V11 | 1180 | 1037 | 143 | 486 | η-Phase stabil ab 1127°C |
| V12 | 1097 | 917 | 180 | 415 | Keine η-Phase |
| V13 | 1087 | 1027 | 60 | 426 | Keine η-Phase |
| V14 | 1097 | 967 | 130 | 417 | Keine η-Phase |
| V15 | 1077 | 1027 | 50 | 470 | Keine η-Phase |
| V16 | 1097 | 997 | 100 | 442 | Keine η-Phase |
| V17 | 1152 | 957 | 195 | 448 | Keine η-Phase |
| V20 | 1162 | 950 | 212 | 446 | Kleine Mengen η-Phase ; evtl. nach Auslagerung bei 800°C |
| V21 | 1127 | 952 | 175 | 455 | Keine η-Phase |
| V22 | 1177 | 952 | 225 | | Keine η-Phase |
| L03 | 1117 | 887 | 230 | 396 | η-Phase stabil ab 937°C |
| L04 | 1100 | 977 | 123 | 410 | Kleine Mengen η-Phase, stabil ab 950°C bis 910°C |
| L06 | 1200 | 700 | 500 | 473 | η-Phase stabil ab 1050°C |
| L07 | 1100 | 900 | 200 | 442 | η-Phase stabil ab 1050°C |
| L09 | 1100 | 950 | 150 | 488 | η-Phase stabiler als δ |
| L12 | 1250 | keine | | 530 | η-Phase primär, δ-Phase primär, Laves-Phase |
| L13 | 1240 | keine | | 503 | η-Phase primär, δ-Phase primär, Laves-Phase |
| L15 | 1077 | 977 | 100 | 423 | η-Phase stabil |
| L16 | 1070 | 977 | 93 | 450 | η-Phase stabil |
| L17 | 1152 | 952 | 200 | 464 | η-Phase stabil ab 1097°C |
| L18 | 1157 | 977 | 180 | 452 | η-Phase stabil ab 1047°C |
| A718 | 1027 | 847 | 180 | 441 | Keine η-Phase |
| A718Plus | 1027 | 976 | 51 | | η-Phase Nb₃Al_{0,5}Nb_{0,5} |
| Waspaloy | | 1035 | | | Keine η-Phase, keine γ"-Phase |

**Tabelle 7: Beispielhafte Versuchslegierungen für die Forderung des Al/Ti-Verhältnisses für erfindungsgemäße Legierungen.**

| Legierung | Al/Ti | Gefügestabilität nach 500 h bei 800°C | Bemerkungen |
|---|---|---|---|
| | | | |
| L04 | 2,02 | Nicht erfüllt | Beispielhafte Legierung, die die Forderung nicht erfüllt. |
| | | | |
| V13 | 7,15 | Erfüllt | Beispielhafte Legierung, die die Forderung erfüllt, aber bei einer relativ hohen γ'-Solvus-Temperatur. |
| V15 | 8,28 | | |
| | | | |
| V16 | 20,35 | Erfüllt | Beispielhafte Legierungen, die die Forderung erfüllen. |
| V17 | 20,35 | Erfüllt | |

**Tabelle 8**

| Mechanische Prüfwerte A780 / im Vergleich zu A718 geprüft an Stauchproben (lösungsgeglüht + ausgehärtet) | | | | | | | | | | | | | | | | |
|---|---|---|---|---|---|---|---|---|---|---|---|---|---|---|---|---|
| | Zuqversuch 20°C | | | | Warmzugversuch 650°C | | | | Warmzugversuch 700°C | | | | Warmzuqversuch 750°C | | | |
| | 20 °C | 20 °C | 20 °C | 20 °C | 650 °C | 650 °C | 650 °C | 650 °C | 700 °C | 700 °C | 700 °C | 700 °C | 750 °C | 750 °C | 750 °C | 750 °C |
| Charge | Rp0.2 (MPa) | Rm (MPa) | A5 (%) | Z (%) | Rp0.2 (MPa) | Rm (MPa) | A5 (%) | Z (%) | Rp0.2 (MPa) | Rm (MPa) | A5 (%) | Z (%) | Rp0.2 (MPa) | Rm (MPa) | A5 (%) | Z (%) |
| 25 | 1179 | 1495 | 24 | 32 | 1046 | 1388 | 12 | 15 | 1000 | 1245 | 11 | 13 | 908 | 1075 | 15 | 13 |
| 26 | 1191 | 1521 | 26 | 37 | 1015 | 1292 | 12 | 17 | 984 | 1203 | 10 | 10 | 910 | 1057 | 6 | 8 |
| 27 | 1222 | 1556 | 23 | 38 | 1055 | 1363 | 11 | 14 | 1032 | 1255 | 8 | 9 | 943 | 1109 | 11 | 12 |
| A718 (420159) | 1262 | 1494 | 16 | 29 | 1031 | 1231 | 23 | 59 | 958 | 1100 | 25 | 72 | 729 | 865 | 34 | 87 |

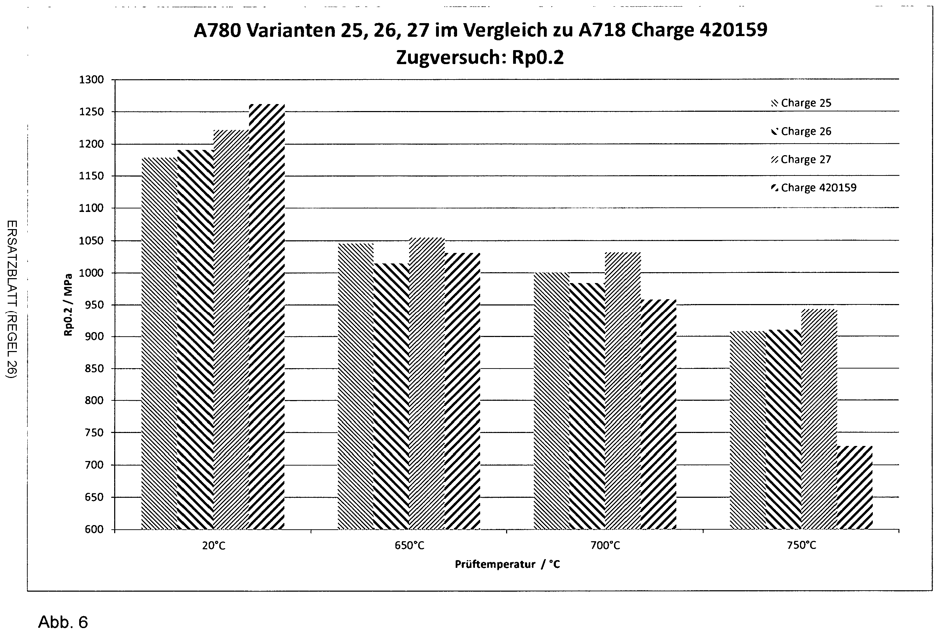

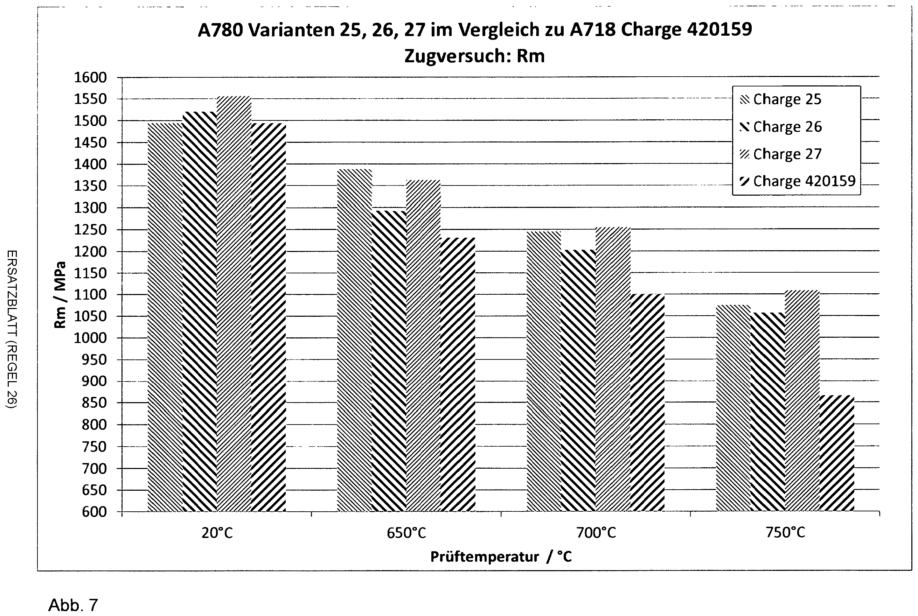

In dem Erfindungsgegenstand weiterhin beschreibender Weise wird auf die Abb. 6 und 7 in Verbindung mit Tabelle 8 verwiesen.

Die Abb. 6 und 7 zeigen Diagramme mit Festigkeitsprüfdaten bei 20° C, 650°C, 700° C und 750° C der neuen Legierung (VDM Alloy 780 Premium), hier Chargen 25, 26 und 27 im Vergleich zu der dem Stand der Technik zugehörigen Legierung Alloy 718 (Charge 420159). Aus den Diagrammen ist erkennbar, dass A 780 gegenüber A 718 bei höheren Prüfparametern in Warmzugversuchen höhere Festigkeitswerte Rp 0,2 erzielt (gemessen an Stauchproben im ausgehärteten Zustand).

Darüber hinaus wurde festgestellt, dass A 780 auch im Kriech- und Stress-Rupture-Test bei 700° C die gewünschten mechanischen Eigenschaften deutlich kleiner 0,2 % Kriechdehnung sowie deutlich längere Haltezeiten > 23 h im Stress-Rupture-Test erzielt - bei sonst identischen Testbedingungen, wie diese Eigenschaften von A 718 lediglich bis 650° C Testtemperatur erreicht werden.

Tabelle 8 zeigt die in Abb. 6 und 7 angeführten Chargen 25 - 27 im Vergleich zu A 718. Hier ist ersichtlich, dass insbesondere die Zugfestigkeit Rm der A 780-Chargen 25 - 27 bei höheren Temperaturen (700° C und 750° C) in den Warmzugversuchen höhere Werte erzielen als A 718.

### Figurenbeschreibung

- Abb. 1:: γ'-Solvus-Temperaturen der Versuchslegierungen in Abhängigkeit von den Summengehalten Al + Ti (Atom-%) der chemischen Zusammensetzungen.
- Abb. 2:: γ'-Solvus-Temperaturen der Versuchslegierungen in Abhängigkeit von den Summengehalten Al + Ti (at%) der chemischen Zusammensetzungen mit dem eingegrenzten Temperaturbereich zwischen 945°C und 1000°C.
- Abb. 3:: Auftreten der η-Phase gegen die Auftragungen der Gehalte an Co und Ti der Versuchslegierungen.
- Abb. 4:: Differenz zwischen δ-Solvus- und γ'-Solvus-Temperatur der Versuchslegierungen in Abhängigkeit von den Summengehalten Al + Ti (at%). Offene Quadrate: Co < 11,5 at%, offene Rauten: 11,5 at% ≤ Co ≤ 18 at%, geschlossene Rauten: Co > 18 at%.
- Abb. 5:: Beispielhafte REM-Aufnahmen für Versuchslegierungen L4, V10, V15, V16 und V17 nach Auslagerungsglühungen von 500 h bei 800°C.
- Abb.6:: A 780 Varianten im Vergleich zu Alloy 718 (Zugversuch: Rp 0,2).
- Abb. 7:: A 780 Varianten im Vergleich zu Alloy 718 (Zugversuch: Rm).

## Patentansprüche

1. Ni-Co-Legierung mit (in Gew.-%) > 0 - max. 10 % Fe, > 12 bis < 35 % Co, 13 bis 23 % Cr, 1 bis 6 % Mo, 4 bis 6 % Nb + Ta, > 0 - < 3 % Al, > 0 bis < 2 % Ti, > 0 - max. 0,1 % C, > 0 - max. 0,03 % P, > 0 - max. 0,01 % Mg, > 0 - max. 0,02 % B, > 0 - max. 0,1 % Zr, Rest Ni, bedarfsweise an Begleitelementen (in Gew.-%) enthaltend:
max. 0,5 % Cu
max. 0,015 % S
max. 1,0 % Mn
max. 1,0 % Si
max. 0,01 % Ca
max. 0,03 % N
max. 0,02 % O,
bedarfsweise des Weiteren (in Gew.-%) enthaltend:
bis 4 % V
bis 4 % W, wobei
die Legierung nachfolgend aufgeführte Forderungen und Kriterien erfüllt:
a) 3 at% < Al+Ti (at%) ≤ 5,6 at% sowie 11,5 at% ≤ Co ≤ 35 at%;
b) Verhältnis Al/Ti ≥ 5 (auf Basis der Gehalte in at%).

2. Legierung nach Anspruch 1 mit Al + Ti ≤ 4,7 at% sowie mit Co-Gehalten ≥ 11,5 at% und ≤ 35 at%.

3. Legierung nach einem der Ansprüche 1 oder 2, mit einem Co-Gehalt ≥ 15 at% und ≤ 35 at%.

4. Legierung nach einem der Ansprüche 1 bis 3, mit einem Ti-Gehalt ≤ 0,8 at%.

5. Legierung nach einem der Ansprüche 1 bis 4, mit einem Ti-Gehalt ≤ 0,65 at%.

6. Legierung nach einem der Ansprüche 1 bis 5, mit einem Gehalt 4,7 ≤ Nb + Ta ≤ 5,7 Gew.-%.

7. Legierung nach einem der Ansprüche 1 bis 6 mit Gehalten an Ti, Al und Co gemäß folgender Grenzwerte:
0,05 at% ≤ Ti ≤ 0,5 at%
3,6 at% ≤ Al ≤ 4,6 at%
15 at% ≤ Co ≤ 32 at%.

8. Legierung nach einem der Ansprüche 1 bis 7, **dadurch gekennzeichnet, dass** sie für folgende Halbzeugformen einsetzbar ist: Band, Blech, Draht, Stange.

9. Verwendung der Legierung nach einem der Ansprüche 1 bis 8 als Komponenten einer Flugzeugturbine, insbesondere rotierende Turbinenscheiben sowie Komponenten einer stationären Turbine.

10. Verwendung der Legierung nach einem der Ansprüche 1 bis 8 im Motorenbau, im Ofenbau, im Kesselbau, im Kraftwerksbau.

11. Verwendung der Legierung nach einem der Ansprüche 1 bis 8 als Bauteil in der Öl- und Gasfördertechnik.

12. Verwendung der Legierung nach einem der Ansprüche 1 bis 8 als Bauteile in stationären Gas- und Dampfturbinen.

13. Verwendung der Legierung nach einem der Ansprüche 1 bis 8 als Schweißzusatzwerkstoff.

## Claims

1. A Ni-Co alloy comprising (in % by weight) > 0 - max. 10 % Fe, > 12 to < 35 % Co, 13 to 23 % Cr, 1 to 6 % MO, 4 to 6 % Nb + Ta, > 0 - < 3 % Al, > 0 to < 2 % Ti, > 0 to max. 0.1 % C, > 0 to max. 0.03 % P, > 0 to max. 0.01 % Mg, > 0 to max. 0.02 % B, > 0 to max. 0.1 % Zr, the rest being Ni, if required, containing the following accompanying elements (in % by weight):
max. 0.5 % Cu
max. 0.015 % S
max. 1.0 % Mn
max. 1.0 % Si
max. 0.01 % Ca
max. 0.03 % N
max. 0.02 % O,
if needed, furthermore containing (in % by weight):
until 4 % V
until 4 % W, wherein
the alloy meets the demands and criteria mentioned in the following:
a) 3 at% < Al + Ti (at%) ≤ 5.6 at% as well as 11.5 at% ≤ Co ≤ 35 at%;
b) ratio Al/Ti ≥ 5 (on the base of the contents in at%).

2. An alloy according to claim 1, comprising Al + Ti ≤ 4.7 at% as well as comprising

3. An alloy according to one of the claims 1 or 2, comprising a Co content ≥ 15 at% and ≤ 35 at%.

4. An alloy according to one of the claims 1 through 3, comprising a Ti content ≤ 0.8 at%.

5. An alloy according to one of the claims 1 through 4, comprising a Ti content ≤ 0.65 at%.

6. An alloy according to one of the claims 1 through 5, comprising a content of 4.7 ≤ Nb + Ta ≤ 5.7 % by weight.

7. An alloy according to one of the claims 1 through 6, comprising contents of Ti, Al and Co according to the following limits:
0.05 at% ≤ Ti ≤ 0.5 at%
3.6 at% ≤ Al ≤ 4.6 at%
15 ar% ≤ Co ≤ 32 at%.

8. An alloy according to one of the claims 1 through 7, **characterized in that** it can be used for the following semi-product forms: band, metal sheet, wire, rod.

9. A use of the alloy according to one of the claims 1 through 8 as components of an airplane turbine, in particular rotating turbine disks as well as components of a stationary turbine.

10. A use of the alloy according to one of the claims 1 through 8 in the engine manufacturing, in the furnace construction, in the boiler construction, in the construction of power plants.

11. A use of the alloy according to one of the claims 1 through 8 as structural element in the oil and gas conveyance technology.

12. A use of the alloy according to one of the claims 1 through 8 as structural elements in stationary gas and steam turbines.

13. A use of the alloy according to one of the claims 1 through 8 as filler metal.

## Revendications

1. Alliage Ni-Co comprenant (en % en poids) > 0 à max. 10 % de Fe, > 12 à 35 % de Co, 13 à 23 % de Cr, 1 >à 6 % de Mo, 4 à 6 % de Nb + Ta, > 0 à < 3% de Al, > 0 à < 2 % de Ti, > 0 à max. 0,1 % de C, > 0 à max. 0,03 % de P, < 0 à max. 0,01 % de Mg, < 0 à max. 0,02 % de B, > 0 à max. 0,1 % de Zr, le reste étant du Ni, si nécessaire, contenant des éléments d'accompagnement (en % en poids) :
max. 0.5 % de Cu
max. 0.015 % de S
max. 1.0 % de Mn
max. 1.0 % de Si
max. 0.01 % de Ca
max. 0.03 % de N
max. 0.02 % de O,
si nécessaire, contenant en outre (en % en poids) :
jusqu'à 4 % de V
jusqu'à 4 % de W, dans lequel
l'alliage satisfait à des exigences et à de critères suivantes :
a) 3 % en atomes < Al + Ti (% en atomes) ≤ 5,6 % en atomes ainsi que 11,5 % en atomes ≤ Co ≤ 35 % en atomes ;
b) le rapport Al/Ti ≥ 5 (sur la base des teneurs en % en atomes).

2. Alliage selon la revendication 1, comprenant Al + Ti ≤ 4,7 % en atomes ainsi que des teneurs en Co ≥ 11,5 % en atomes et ≤ 35 % en atomes.

3. Alliage selon l'une des revendications 1 ou 2, comprenant une teneur en Co de ≥ 15 % en atomes et ≤ 35 % en atomes.

4. Alliage selon l'une des revendications 1 à 3, comprenant une teneur en Ti de ≤ 0,8 % en atomes.

5. Alliage selon l'une des revendications 1 à 4, comprenant une teneur en Ti de ≤ 0,65 % en atomes.

6. Alliage selon l'une des revendications 1 à 5, comprenant une teneur de 4,7 ≤ Nb + Ta ≤ 5,7 % en poids.

7. Alliage selon l'une des revendications 1 à 6, comprenant des teneurs en Ti, en Al et en Co selon les limites suivantes :
0.05 at% ≤ Ti ≤ 0.5 at%
3.6 at% ≤ Al ≤ 4.6 at%
15 ar% ≤ Co ≤ 32 at%.

8. Alliage selon l'une des revendications 1 à 7, **caractérisé en ce qu'**il peut être utilisé pour les formes de produit semi-fini suivantes : la bande, la tôle, le fil de fer, la tige.

9. Utilisation de l'alliage selon l'une des revendications 1 à 8, pour des composants d'une turbine d'avion, notamment des disques de turbine tournants, ainsi que des composants d'une turbine stationnaire.

10. Utilisation de l'alliage selon l'une des revendications 1 à 8 dans la construction de moteurs, dans la construction de fours, dans la construction de chaudières, dans la construction de centrales électriques.

11. Utilisation de l'alliage selon l'une des revendications 1 à 8 pour des éléments de construction dans la technologie de production de pétrole et de gaz.

12. Utilisation de l'alliage selon l'une des revendications 1 à 8 pour des éléments de construction dans des turbines à gaz et à vapeur stationnaires.

13. Utilisation de l'alliage selon l'une des revendications 1 à 8 comme métal d'apport.
